# FASCICULE DE BREVET EUROPEEN

(11) **EP 2 861 872 B1**
(45) Date de publication et mention de la délivrance du brevet: **15.05.2019**
(21) Numéro de dépôt: 13733366.2
(22) Date de dépôt: 06.06.2013
(51) Int. Cl.: F16B 5/02

(54) **ELEMENT DE REPRISE D'EFFORT ET ELEMENT DE RECEPTION ASSOCIE POUR L'ASSEMBLAGE DE DEUX PIECES EN MATERIAU POLYMERE ET ASSEMBLAGE CORRESPONDANT**
STAMMAUFNAHMEELEMENT UND ZUGEHÖRIGES EMPFANGSELEMENT ZUR ANORDNUNG ZWEIER TEILE AUS POLYMERMATERIAL UND ZUGEHÖRIGE ANORDNUNG
STRAIN-TAKE-UP ELEMENT AND ASSOCIATED RECEIVING ELEMENT FOR ASSEMBLING TWO PARTS MADE OF POLYMER MATERIAL AND CORRESPONDING ASSEMBLY

(30) Priorité: 15.06.2012 FR 1255622
(43) Date de publication de la demande: 22.04.2015
(73) Titulaire: Renault S.A.S., 92100 Boulogne-Billancourt (FR)
(72) Inventeur: BOUILLON, Jean-charles, F-78940 La Queue Lez Yvelines (FR)
(86) Numéro de dépôt international: PCT/FR2013/051301
(87) Numéro de publication internationale: WO 2013/186467

(56) Documents cités:
- EP-A1- 2 399 784
- US-A- 5 046 904

## Description

L'invention concerne un élément de reprise d'effort et un élément de réception associé pour l'assemblage de deux pièces en matériau polymère et l'assemblage correspondant. Le document EP 2 399 784 A1 montre un exemple de l'état de la technique.

Lorsque des pièces en matériau polymère doivent être assemblées entre elles, il arrive que les liaisons entre ces pièces doivent supporter des efforts dans une direction sensiblement perpendiculaire à la direction de liaison. La sollicitation des liaisons, en particulier lorsqu'elles sont elles-mêmes en matériau polymère, tel que des clips ou des vis, peut entraîner une fatigue de ces liaisons, l'apparition d'un jeu, ou même une rupture de la liaison.

Afin d'éviter de telles sollicitations, il est connu de prévoir des boîtiers de reprise d'effort supportant ces sollicitations. De tels boîtiers de reprise d'effort sont formés de deux parties coopérant l'une avec l'autre, l'une des parties étant solidaire de l'une des pièces à assembler et l'autre partie étant solidaire de l'autre pièce à assembler. En plus de ces boîtiers de reprise d'effort, il est généralement aussi nécessaire de prévoir des boîtiers d'indexation (également en deux parties) assurant un positionnement relatif correct des pièces à assembler.

Dans certains cas, par exemple dans l'industrie automobile, l'environnement est fortement contraint, ce qui impose de limiter le nombre de ces éléments et/ou de les compacter le plus possible, sans toutefois altérer la paroi visible de la pièce comportant ces éléments.

L'invention vise à pallier ces inconvénients en proposant un élément à reprise d'effort et un élément de réception correspondant pour l'assemblage de deux pièces en matériau polymère, dont la conception permet d'en réduire les dimensions et d'assurer à la fois une fonction d'indexation et de reprise d'efforts des deux pièces à assembler, tout en respectant l'aspect extérieur des pièces à assembler.

A cet effet, un premier objet de l'invention concerne un élément de reprise d'effort en matériau polymère pour l'assemblage de deux pièces, comprenant un caisson creux de forme sensiblement parallélépipédique comprenant une paroi supérieure et une paroi inférieure reliées par des parois latérales dont au moins quatre parois latérales planes parallèles deux à deux, l'une des parois latérales étant ouverte, le caisson creux comprenant sur la face externe de sa paroi supérieure, des cloisons formant une croix d'indexation à quatre branches, chaque branche s'étendant sensiblement perpendiculairement à l'une desdites quatre parois latérales planes du caisson creux et deux branches opposées de la croix d'indexation présentent chacune une extrémité libre formant un plan s'étendant dans la continuité du plan de la face externe de la paroi latérale plane adjacente.

La réalisation d'un caisson creux sur l'élément de reprise d'effort permet d'éviter à la fabrication l'apparition de retassures sur la face externe de la paroi inférieure, qui peut être une face visible.

Ce caisson creux et la croix d'indexation jouent en outre un rôle de reprise des efforts par coopération avec un élément de réception adapté conforme à l'invention, décrit plus loin. Les efforts subis sont notamment répartis au sein de la pièce comportant l'élément de reprise d'effort, en partie grâce à la partie en forme de caisson creux. Une telle répartition des efforts permet notamment d'éviter l'apparition de blanchiment sur des matériaux polymère foncés, aux endroits de concentration des contraintes.

La reprise d'effort est en outre plus importante selon une direction parallèle à la direction des branches dont l'extrémité libre s'étend dans la continuité du plan de la face externe de la paroi latérale plane adjacente. Cet agencement particulier permet d'augmenter considérablement la reprise d'effort dans cette direction, ce qui peut être particulièrement utile lorsque des pièces assemblées subissent des contraintes répétées élevées dans une direction principale.

Enfin, la croix d'indexation permet l'indexation des pièces à assembler tout en renforçant structurellement les branches. En outre l'agencement de ces différents éléments entre eux permet de réduire la dimension de l'ensemble formé de l'élément de reprise d'effort et de l'élément de réception, ce qui autorise son utilisation pour l'assemblage de deux pièces dans un environnement particulièrement contraint. Les branches de la croix d'indexation peuvent être perpendiculaires les unes aux autres.

Avantageusement et de manière non limitative, le caisson creux comprend sur la face externe de sa paroi supérieure un cylindre pourvu d'un alésage traversant, ledit alésage traversant la paroi supérieure, chaque branche de la croix d'indexation étant solidaire de la face externe du cylindre et l'axe de l'alésage étant confondu avec l'axe de convergence des branches de la croix d'indexation.

Cet agencement permet de fixer l'élément de reprise d'effort à l'élément de réception qui vient le coiffer, ce qui permet de réduire les risques d'apparition de vibrations entre ces deux éléments au cours du temps suite au vieillissement des matériaux polymères utilisés. En outre, les branches formant la croix d'indexation renforcent la structure du cylindre.

Avantageusement et de manière non limitative, la hauteur du cylindre au dessus de la paroi supérieure du caisson creux suivant son axe est supérieure à la hauteur des branches de la croix suivant ce même axe. Ceci permet de garantir un plaquage parfait entre l'élément de reprise d'effort et l'élément de réception associé décrit plus loin lors de leur assemblage par vissage.

Avantageusement et de manière non limitative, les deux autres branches opposées de la croix d'indexation présentent chacune une extrémité formant un plan s'étendant dans la continuité du plan de la face externe de la paroi latérale plane adjacente. La reprise d'effort peut alors s'effectuer dans les deux directions de la croix d'indexation.

Avantageusement et de manière non limitative, les branches de la croix d'indexation sont sensiblement perpendiculaires à la paroi supérieure du caisson creux. Elles sont ainsi orientées suivant l'axe de l'effort principal, ce qui accroit la résistance de l'ensemble.

L'invention a également pour objet un élément de réception en matériau polymère destiné à coopérer avec un élément de reprise d'effort selon l'invention. Cet élément de réception comprend une paroi de fond et des parois latérales dont au moins quatre parois latérales planes parallèles deux à deux, les parois de fond et latérales définissant un logement de forme sensiblement parallélépipédique conformé pour recevoir l'élément de reprise d'effort. L'élément de réception est également conformé pour que, lorsque l'élément de reprise d'effort est logé dans ledit logement :
- les parois latérales de l'élément de réception sont en contact avec les parois latérales du caisson creux de l'élément de reprise d'effort,
- la paroi de fond de l'élément de réception est en contact avec la croix d'indexation ou le cylindre de l'élément de reprise d'effort,
- au moins deux parois planes opposées sont en contact avec les extrémités libres planes de deux branches opposées de la croix d'indexation de l'élément de reprise d'effort.

Le logement définit dans l'élément de réception présente ainsi une forme complémentaire de la forme externe de l'élément de reprise d'effort.

L'agencement de l'élément de réception permet d'assurer un contact étroit entre les parois latérales de l'élément de réception, les parois latérales planes du caisson creux et les extrémités planes de la croix d'indexation, ce qui assure une reprise d'effort dans les directions des branches de la croix d'indexation, la reprise d'effort étant plus importante dans la direction de la croix d'indexation correspondant aux branches pourvues d'extrémités libres planes qui s'étendent dans la continuité de la face externe des parois planes adjacentes du caisson creux de l'élément de reprise d'effort.

Les efforts subis peuvent ainsi être répartis au sein de la pièce comportant l'élément de réception, en partie grâce du logement de réception de la partie en forme de caisson creux de l'élément de reprise d'effort.

L'élément de réception et l'élément de reprise d'effort peuvent avantageusement être conformés de manière à ce qu'il n'existe pas de jeu entre leurs parois latérales planes en contact, en particulier suivant la direction des branches de la croix d'indexation dont les extrémités libres planes s'étendent dans la continuité de la face externe des parois latérales planes adjacentes du caisson creux de l'élément de reprise.

Avantageusement et de manière non limitative, lorsque l'élément de reprise d'effort comprend un cylindre percé d'un alésage fileté, la paroi de fond de l'élément de réception comprend un orifice traversant positionné pour que son axe soit confondu avec l'axe du cylindre de l'élément de reprise d'effort lorsque ce dernier est logé dans le logement, cet orifice présentant un diamètre égal ou supérieur au diamètre de l'alésage du cylindre.

L'élément de réception et l'élément de reprise d'effort peuvent alors être fixés l'un à l'autre au moyen d'une vis, ce qui permet de limiter les mouvements relatifs des deux éléments.

Le matériau polymère utilisé pour l'élément de reprise d'effort et l'élément de réception peut être un polymère peu couteux, par exemple un polypropylène non chargé, présentant une rigidité suffisante pour ne pas se déformer aux températures d'utilisation, qui peuvent être comprises de -30°C à 100°C.

L'élément de reprise d'effort et l'élément de réception correspondant selon l'invention forment un boîtier de reprise d'effort qui peut être utilisé lors de l'assemblage de deux pièces en matériau polymère pour l'indexation et la reprise des efforts subis par ces deux pièces assemblées.

Il est ainsi possible de réaliser un boîtier de reprise d'effort dont les dimensions peuvent être considérablement réduites par rapport aux boîtiers de reprise d'effort de l'art antérieur.
- la dimension la plus grande entre deux parois planes parallèles de l'élément de réception, perpendiculairement à la paroi de fond de cet élément de réception, est typiquement comprise entre 18 et 30 mm, par exemple 22 mm.
- la dimension la plus petite entre deux parois planes parallèles de l'élément de réception, perpendiculairement à la paroi de fond de cet élément de réception, est typiquement comprise entre 14 et 20 mm, par exemple 15 mm.
- la dimension, perpendiculairement à la paroi de fond de l'élément de réception, notamment le long de l'axe de vissage, depuis la face visible (du côté opposé au caisson) de la paroi inférieure de l'élément de reprise d'effort jusqu'à la face visible (externe) de la paroi de fond de l'élément de réception, est typiquement comprise entre 15 et 20 mm, par exemple 17 mm.

L'invention concerne également un assemblage de deux pièces en matériau polymère, caractérisé en ce que :
- la première pièce comprend sur une face d'assemblage au moins un élément de reprise d'effort selon l'invention, ladite face d'assemblage formant la paroi inférieure du caisson creux dudit élément de reprise d'effort,
- la deuxième pièce présente au moins un élément de réception selon l'invention pour recevoir ledit au moins un élément de reprise d'effort de la première pièce, les parois latérales d'un élément de reprise d'effort et d'un élément de réception correspondant étant en contact.

Cet assemblage permet une reprise efficace des efforts ainsi qu'une indexation des pièces à assembler. En particulier, un détrompage peut être obtenu en réalisant un caisson creux dont deux parois opposées sont de dimensions et/ou de formes différentes des deux autres parois opposées.

Avantageusement et de manière non limitative, chaque élément de réception est assemblé à un élément de reprise d'effort au moyen d'une vis de fixation traversant l'orifice dudit élément de réception et l'alésage du cylindre dudit élément de reprise d'effort. Tel que déjà mentionné, le serrage par mise en place d'une vis permet d'éviter l'apparition de vibrations susceptibles d'être générées du fait du vieillissement des matériaux polymères employés.

Avantageusement et de manière non limitative, les éléments de reprise d'effort présentent tous la même orientation. Ceci est particulièrement avantageux lorsque l'assemblage subit des contraintes dans une seule direction, ou selon deux directions correspondant aux directions des branches de la croix d'indexation, ces directions étant le plus souvent perpendiculaires.

Avantageusement et de manière non limitative, les éléments de reprise d'effort sont orientés de sorte que les branches de la croix d'indexation dont les extrémités libres planes s'étendent dans la continuité de la face externe des parois latérales planes adjacentes du caisson creux de l'élément de reprise s'étendent dans une direction correspondant à la direction des forces les plus élevées exercées sur l'assemblage.

Les pièces à assembler de l'assemblage selon l'invention sont par exemple des éléments de garniture de l'habitacle d'un véhicule. Il s'agit par exemple d'éléments de garniture de porte dont l'un peut former la partie accoudoir de la garniture de porte.

L'invention est maintenant décrite en référence aux dessins annexés, non limitatifs, dans lesquels :
- les figures 1 et 2 sont des vues en perspective d'un élément de reprise d'effort selon l'invention vue de deux côtés opposés,
- la figure 3 est une vue en perspective de dessus d'un élément de réception selon l'invention coiffant un élément de reprise tel que représenté sur les figures 1 et 2 ;
- la figure 4 est une vue en coupe selon la ligne AA de la figure 3.

Par sensiblement horizontal, longitudinal ou vertical, on entend une direction/un plan formant un angle d'au plus ±10°, typiquement d'au plus ±5° ou de l'ordre de 1°, avec une direction/un plan horizontal, longitudinal ou vertical.

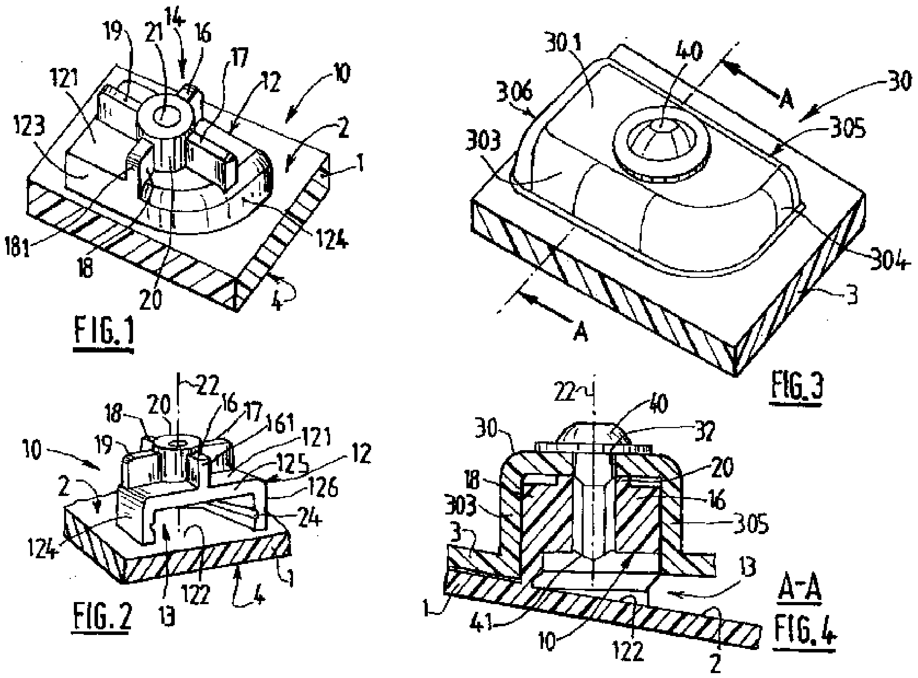

Les figures 1 et 2 représentent un élément de reprise d'effort 10 en matériau polymère pour l'assemblage de deux pièces.

Cet élément de reprise d'effort 10 comprend un caisson creux 12 de forme sensiblement parallélépipédique. Par forme sensiblement parallélépipédique, on entend que les parois principales font partie d'un parallélépipède mais qu'elles peuvent être reliées par des parois courbes ou planes ne faisant pas partie de ce parallélépipède.

Les faces externes du caisson creux 12 sont les faces visibles de l'extérieur du caisson creux 12, en opposition aux faces internes délimitant l'espace libre 13 intérieur du caisson creux 12.

Ce caisson creux 12 comprend une paroi supérieure 121 et une paroi inférieure 122 reliées par quatre parois latérales 123, 124, 125, 126 planes parallèles deux à deux, l'une 125 des parois latérales étant ouverte (figure 2). Les parois 123 et 125 sont sensiblement perpendiculaires aux parois 124, 126.

Le caisson creux 12 comprend également sur sa paroi supérieure 121, des cloisons formant une croix d'indexation 14 à quatre branches 16, 17, 18, 19. Ces branches 16-19 sont sensiblement perpendiculaires entre elles et à la paroi supérieure 121 du caisson creux dans l'exemple représenté.

Chaque branche 16, 17, 18, 19 s'étend sensiblement perpendiculairement à l'une desdites quatre parois latérales planes respectivement 123, 124, 125, 126 du caisson creux 12. Deux branches opposées 16, 18 de la croix d'indexation 14 présentent chacune une extrémité libre 161, 181 formant un plan s'étendant dans la continuité du plan de la face externe de la paroi latérale plane adjacente 123, 125 respectivement.

Le caisson creux 12 représenté comprend sur sa paroi supérieure 121 un cylindre 20 pourvu d'un alésage traversant fileté 21. Cet alésage fileté 21 traverse entièrement la paroi supérieure 121 et débouche dans l'espace libre 13 situé entre la paroi supérieure 121 et la paroi inférieure 122 (figures 2 et 4).

Chaque branche 16, 17, 18, 19 de la croix d'indexation 14 est solidaire de la face externe du cylindre 20, l'axe 22 de l'alésage 21 étant confondu avec l'axe de convergence des branches 16, 17, 18, 19 de la croix d'indexation 14.

La hauteur du cylindre au dessus de la paroi supérieure 121 du caisson creux 12 suivant son axe 22 est supérieure à la hauteur des branches 16, 17, 18, 19 de la croix d'indexation 14 suivant ce même axe 22 (voir figure 4).

Sur les figures 3 et 4, est également représenté un élément de réception 30 en matériau polymère destiné à coopérer avec l'élément de reprise d'effort 10 décrit en référence aux figures 1, 2 et 4. Seules les faces externes de l'élément de réception 30 sont visibles sur la figure 3.

Cet élément de réception 30 comprend une paroi de fond 301 et quatre parois latérales planes 303, 304, 305, 306 parallèles deux à deux, les parois de fond 301 et latérales 303, 304, 305, 306 définissant un logement conformé pour recevoir l'élément de reprise d'effort 10. Ce logement présente ainsi une forme sensiblement parallélépipédique, complémentaire de la forme externe de l'élément de reprise d'effort 10.

Les parois latérales planes 303, 304, 305, 306 sont reliées par un arrondi à la paroi de fond 301 et sont sensiblement perpendiculaires à cette paroi de fond 301. Les parois latérales planes 303 et 305 sont sensiblement perpendiculaires aux parois latérales planes 304 et 306.

L'élément de réception 30 est également conformé pour que, lorsque l'élément de reprise d'effort 10 est logé dans le logement :
- les parois latérales de l'élément de réception 30 soient en contact avec les parois latérales du caisson creux 12 de l'élément de reprise d'effort 10,
- la paroi de fond 301 de l'élément de réception 30 est en contact avec le cylindre 20 de l'élément de reprise d'effort 10,
- deux parois planes opposées 303, 305 sont en contact avec les extrémités libres planes 161, 181 de deux branches 16, 18 opposées de la croix d'indexation 14 de l'élément de reprise d'effort 10 (voir figure 4) ainsi qu'avec les faces 123 et 125 du caisson creux 12 de l'élément de reprise d'effort 10.

Tel que représenté sur la figure 4, aucun jeu n'est laissé entre les parois latérales planes en contact de l'élément de réception 30 et de l'élément de reprise d'effort 10 suivant la direction des branches 16, 18 de la croix d'indexation.

La paroi de fond 301 de l'élément de réception 30 comprend un orifice traversant 32 positionné pour que son axe soit confondu avec l'axe 22 du cylindre 20 de l'élément de reprise d'effort lorsque ce dernier est logé dans le logement (figure 4), cet orifice 32 présentant un diamètre égal ou supérieur au diamètre de l'alésage 21 du cylindre 20.

L'élément de réception 30 et l'élément de reprise d'effort 10 représentés sont fixés l'un à l'autre au moyen d'une vis 40. L'extrémité 41 de la vis peut éventuellement déboucher dans l'espace 13 du caisson ceux 12, sans toutefois rentrer en contact avec la paroi inférieure 122 du caisson creux 12 (figure 4).

Tel que représenté sur les figures 1 et 3, l'élément de reprise d'effort 10 fait partie d'une pièce 1 et est disposé sur une face d'assemblage 2 de celle-ci. La paroi inférieure 122 du caisson creux 12 dudit élément de reprise d'effort fait ainsi partie de cette face d'assemblage 2.

Tel que représenté sur la figure 3, une deuxième pièce 3 présente un élément de réception 30 pour recevoir l'un élément de reprise d'effort 10 de la première pièce 1. En particulier, les faces externes des parois latérales 123, 124, 125, 126 de l'élément de reprise d'effort 10 et les faces internes des parois latérales 303-306 de l'élément de réception 30 sont en contact lorsque l'élément de reprise d'effort 10 est logé dans l'élément de réception 30 (figure 4).

Les branches 16, 18 de la croix d'indexation dont les extrémités libres planes 161, 181 s'étendent dans la continuité des parois latérales planes 123, 125 adjacentes du caisson creux de l'élément de reprise s'étendent dans une direction parallèle au plan de coupe de la figure 4. Cette direction sera avantageusement choisie pour correspondre à la direction des forces les plus élevées exercées sur l'assemblage des pièces 1 et 3.

Afin d'éviter tout risque d'apparition de retassure sur la face visible 4 de la pièce 1 lors de la réalisation par moulage de cette pièce, le caisson creux 12 pourra présenter une rainure 24 s'étendant sur les parois latérales internes des parois latérales 123-126 du caisson creux 12 à une distance suffisante de la paroi inférieure 122 (figure 2).

Les pièces 1 et 3 à assembler sont par exemple des éléments de garniture de l'habitacle d'un véhicule. Il s'agit par exemple d'éléments de garniture de porte dont l'un peut former la partie accoudoir de la garniture de porte.

## Revendications

1. Elément de reprise d'effort (10) en matériau polymère pour l'assemblage de deux pièces (1, 3), comprenant un caisson creux (12) de forme sensiblement parallélépipédique comprenant une paroi supérieure (121) et une paroi inférieure (122) reliées par des parois latérales planes **caractérisé en ce que** au moins quatre desdites parois latérales planes (123, 124, 125, 126) sont parallèles deux à deux, l'une (125) des parois latérales étant ouverte, le caisson creux (12) comprenant sur la face externe de sa paroi supérieure (121), des cloisons formant une croix d'indexation (14) à quatre branches (16, 17, 18, 19), chaque branche (16, 17, 18, 19) s'étendant sensiblement perpendiculairement à l'une desdites quatre parois latérales planes (123, 124, 125, 126) du caisson creux (12) et deux branches (16, 18) opposées de la croix d'indexation (14) présentent chacune une extrémité libre (161, 181) formant un plan s'étendant dans la continuité du plan de la face externe de la paroi latérale plane adjacente (123, 125).

2. Elément de reprise d'effort (10) selon la revendication 1, **caractérisé en ce que** le caisson creux (12) comprend sur la face externe de sa paroi supérieure (122) un cylindre (20) pourvu d'un alésage traversant fileté (21), ledit alésage fileté (21) traversant la paroi supérieure (121), chaque branche (16, 17, 18, 19) de la croix d'indexation (14) étant solidaire de la face externe du cylindre (20) et l'axe (22) de l'alésage (21) étant confondu avec l'axe de convergence des branches (16, 17, 18, 19) de la croix d'indexation (14).

3. Elément de reprise d'effort (10) selon la revendication 2, **caractérisé en ce que** la hauteur du cylindre (20) au-dessus de la paroi supérieure (122) du caisson creux (12) suivant son axe est supérieure à la hauteur des branches (16, 17, 18, 19) de la croix d'indexation (14) suivant ce même axe.

4. Elément de reprise d'effort (10) selon l'une des revendications 1 à 3, **caractérisé en ce que** les deux autres branches (17, 19) opposées de la croix d'indexation (14) présentent chacune une extrémité formant un plan s'étendant dans la continuité du plan de la face externe de la paroi latérale plane adjacente (124, 126).

5. Assemblage de deux pièces (1, 3) en matériau polymère,
**caractérisé en ce que** :
- la première pièce (1) comprend sur une face d'assemblage (2) au moins un élément de reprise d'effort (10) selon l'une des revendications 1 à 4, ladite face d'assemblage (2) formant la paroi inférieure (122) du caisson creux (12) dudit élément de reprise d'effort (10),
- la deuxième pièce (3) présente au moins un élément de réception (30) en matériau polymère pour recevoir ledit au moins un élément de reprise d'effort (10) de la première pièce (1),
dans lequel ledit élément de réception (30) comprend une paroi de fond (301) et des parois latérales dont au moins quatre parois latérales planes (303, 304, 305, 306) parallèles deux à deux, les parois de fond et latérales définissant un logement de forme sensiblement parallélépipédique conformé pour recevoir l'élément de reprise d'effort (10), et **en ce que** l'élément de réception (30) est conformé pour que, lorsque l'élément de reprise d'effort (10) est logé dans ledit logement :
- les parois latérales de l'élément de réception (30) sont en contact avec les parois latérales du caisson creux (12) de l'élément de reprise d'effort (10),
- la paroi de fond (301) de l'élément de réception (30) est en contact avec la croix d'indexation (14) ou le cylindre (20) de l'élément de reprise d'effort (10),
- au moins deux parois planes (303, 305) opposées sont en contact avec les extrémités libres planes (161, 181) de deux branches (16, 18) opposées de la croix d'indexation (14) de l'élément de reprise d'effort (10),
et dans lequel les parois latérales d'un élément de reprise d'effort (10) et d'un élément de réception (30) correspondant sont en contact.

6. Assemblage selon la revendication 5, **caractérisé en ce que** la paroi de fond (301) de l'élément de réception (30) comprend un orifice (32) traversant positionné pour que son axe soit confondu avec l'axe (22) du cylindre (20) de l'élément de reprise d'effort (10) lorsque ce dernier est logé dans le logement, cet orifice (32) présentant un diamètre égal ou supérieur au diamètre de l'alésage (21) du cylindre (20).

7. Assemblage selon la revendication 6, **caractérisé en ce que** chaque élément de réception (30) est assemblé à un élément de reprise d'effort (10) au moyen d'une vis de fixation (40) traversant l'orifice (32) dudit élément de réception (30) et l'alésage (21) du cylindre (20) dudit élément de reprise d'effort (10).

8. Assemblage selon l'une des revendications 5 à 7, **caractérisé en ce que** les éléments de reprise d'effort (10) présentent tous la même orientation.

9. Assemblage selon l'une des revendications 5 à 8, **caractérisé en ce que** les éléments de reprise d'effort (10) sont orientés de sorte que les branches de la croix d'indexation (14), dont les extrémités libres planes s'étendent dans la continuité de la face externe des parois latérales planes adjacentes du caisson creux de l'élément de reprise, s'étendent dans une direction correspondant à la direction des forces les plus élevées exercées sur l'assemblage.

## Patentansprüche

1. Kraftübernahmeelement (10) aus Polymermaterial zum Verbinden von zwei Teilen (1, 3), umfassend einen hohlen Kasten (12) von im Wesentlichen parallelepipedischer Form mit einer oberen Wand (121) und einer unteren Wand (122), die durch ebene Seitenwände verbunden sind, **dadurch gekennzeichnet, dass** mindestens vier der ebenen Seitenwände (123, 124, 125, 126) paarweise parallel sind, wobei eine (125) der Seitenwände offen ist, wobei der hohle Kasten (12) auf der Außenseite seiner oberen Wand (121) Trennwände umfasst, die ein Indexierungskreuz (14) mit vier Schenkeln (16, 17, 18, 19) bilden, wobei sich jeder Schenkel (16, 17, 18, 19) im Wesentlichen senkrecht zu einer der vier ebenen Seitenwände (123, 124, 125, 126) des hohlen Kastens (12) erstreckt und zwei entgegengesetzte Schenkel (16, 18) des Indexierungskreuzes (14) jeweils ein freies Ende (161, 181) aufweisen, das eine Ebene bildet, die sich in der Verlängerung der Ebene der Außenseite der angrenzenden ebenen Seitenwand (123, 125) erstreckt.

2. Kraftübernahmeelement (10) nach Anspruch 1, **dadurch gekennzeichnet, dass** der hohle Kasten (12) auf der Außenseite seiner oberen Wand (122) einen Zylinder (20) umfasst, der mit einer durchgehenden Gewindebohrung (21) versehen ist, wobei die Gewindebohrung (21) die obere Wand (121) durchquert, wobei jeder Schenkel (16, 17, 18, 19) des Indexierungskreuzes (14) einstückig mit der Außenseite des Zylinders (20) ausgebildet ist und die Achse (22) der Bohrung (21) mit der Konvergenzachse der Schenkel (16, 17, 18, 19) des Indexierungskreuzes (14) zusammenfällt.

3. Kraftübernahmeelement (10) nach Anspruch 2, **dadurch gekennzeichnet, dass** die Höhe des Zylinders (20) oberhalb der oberen Wand (122) des hohlen Kastens (12) entlang seiner Achse größer als die Höhe der Schenkel (16, 17, 18, 19) des Indexierungskreuzes (14) entlang derselben Achse ist.

4. Kraftübernahmeelement (10) nach einem der Ansprüche 1 bis 3, **dadurch gekennzeichnet, dass** die beiden anderen entgegengesetzten Schenkel (17, 19) des Indexierungskreuzes (14) jeweils ein Ende aufweisen, das eine Ebene bildet, die sich in der Verlängerung der Ebene der Außenseite der angrenzenden ebenen Seitenwand (124, 126) erstreckt.

5. Verbindung von zwei Teilen (1, 3) aus Polymermaterial,
**dadurch gekennzeichnet, dass**:
- das erste Teil (1) auf einer Verbindungsseite (2) mindestens ein Kraftübernahmeelement (10) nach einem der Ansprüche 1 bis 4 umfasst, wobei die Verbindungsseite (2) die untere Wand (122) des hohlen Kastens (12) des Kraftübernahmeelements (10) bildet,
- das zweite Teil (3) mindestens ein Aufnahmeelement (30) aus Polymermaterial zum Aufnehmen des mindestens einen Kraftübernahmeelements (10) des ersten Teils (1) aufweist,
wobei das Aufnahmeelement (30) eine Bodenwand (301) und Seitenwände umfasst, darunter mindestens vier ebene, paarweise parallele Seitenwände (303, 304, 305, 306), wobei die Boden- und Seitenwände einen im Wesentlichen parallelepipedisch geformten Sitz definieren, der zum Aufnahmen des Kraftübernahmeelements (10) ausgebildet ist, und dass das Aufnahmeelement (30) dazu ausgebildet ist, dass, wenn das Kraftübernahmeelement (10) in dem Sitz sitzt:
- die Seitenwände des Aufnahmeelements (30) in Kontakt mit den Seitenwänden des hohlen Kastens (12) des Kraftübernahmeelements (10) sind,
- die Bodenwand (301) des Aufnahmeelements (30) in Kontakt mit dem Indexierungskreuz (14) oder dem Zylinder (20) des Kraftübernahmeelements (10) ist,
- mindestens zwei entgegengesetzte ebene Wände (303, 305) in Kontakt mit den ebenen freien Enden (161, 181) von zwei entgegengesetzten Schenkeln (16, 18) des Indexierungskreuzes (14) des Kraftübernahmeelements (10) sind,
und wobei die Seitenwände eines Kraftübernahmeelements (10) und eines entsprechenden Aufnahmeelements (30) in Kontakt sind.

6. Verbindung nach Anspruch 5, **dadurch gekennzeichnet, dass** die Bodenwand (301) des Aufnahmeelements (30) eine durchgehende Öffnung (32) umfasst, die so positioniert ist, dass ihre Achse mit der Achse (22) des Zylinders (20) des Kraftübernahmeelements (10) zusammenfällt, wenn dieses in dem Sitz sitzt, wobei diese Öffnung (32) einen Durchmesser aufweist, der gleich oder größer als der Durchmesser der Bohrung (21) des Zylinders (20) ist.

7. Verbindung nach Anspruch 6, **dadurch gekennzeichnet, dass** jedes Aufnahmeelement (30) mit einem Kraftübernahmeelement (10) mittels einer Befestigungsschraube (40) verbunden ist, welche die Öffnung (32) des Aufnahmeelements (30) und die Bohrung (21) des Zylinders (20) des Kraftübernahmeelements (10) durchquert.

8. Verbindung nach einem der Ansprüche 5 bis 7, **dadurch gekennzeichnet, dass** die Kraftübernahmeelemente (10) alle die gleiche Ausrichtung aufweisen.

9. Verbindung nach einem der Ansprüche 5 bis 8, **dadurch gekennzeichnet, dass** die Kraftübernahmeelemente (10) so ausgerichtet sind, dass sich die Schenkel des Indexierungskreuzes (14), deren ebene freie Enden sich in der Verlängerung der Außenseite der angrenzenden ebenen Seitenwände des hohlen Kastens des Übernahmeelements erstrecken, in eine Richtung erstrecken, die der Richtung der stärksten auf die Verbindung ausgeübten Kräfte entspricht.

## Claims

1. Strain take-up element (10) made of polymer material for assembling two parts (1, 3), comprising a hollow box (12) of substantially parallelepipedal form comprising a top wall (121) and a bottom wall (122) linked by planar lateral walls, **characterized in that** at least four of said planar lateral walls (123, 124, 125, 126) are parallel in pairs, one (125) of the lateral walls being open, the hollow box (12) comprising, on the outer face of its top wall (121), partitions forming an indexing cross (14) with four branches (16, 17, 18, 19), each branch (16, 17, 18, 19) extending substantially at right angles to one of said four planar lateral walls (123, 124, 125, 126) of the hollow box (12) and two opposing branches (16, 18) of the indexing cross (14) each have a free end (161, 181) forming a plane extending in the continuity of the plane of the outer face of the adjacent planar lateral wall (123, 125).

2. Strain take-up element (10) according to Claim 1, **characterized in that** the hollow box (12) comprises, on the outer face of its top wall (122), a cylinder (20) provided with a threaded through-bore (21), said threaded bore (21) passing through the top wall (121), each branch (16, 17, 18, 19) of the indexing cross (14) being integral to the outer face of the cylinder (20) and the axis (22) of the bore (21) coinciding with the axis of convergence of the branches (16, 17, 18, 19) of the indexing cross (14) .

3. Strain take-up element (10) according to Claim 2, **characterized in that** the height of the cylinder (20) above the top wall (122) of the hollow box (12) along its axis is greater than the height of the branches (16, 17, 18, 19) of the indexing cross (14) along this same axis.

4. Strain take-up element (10) according to one of Claims 1 to 3, **characterized in that** the other two opposing branches (17, 19) of the indexing cross (14) each have an end forming a plane extending in the continuity of the plane of the outer face of the adjacent planar lateral wall (124, 126).

5. Assembly of two parts (1, 3) made of polymer material,
**characterized in that**:
- the first part (1) comprises, on an assembly face (2), at least one strain take-up element (10) according to one of Claims 1 to 4, said assembly face (2) forming the bottom wall (122) of the hollow box (12) of said strain take-up element (10),
- the second part (3) has at least one receiving element (30) made of polymer material for receiving said at least one strain take-up element (10) of the first part (1),
in which said receiving element (30) comprises a back wall (301) and lateral walls including at least four planar lateral walls (303, 304, 305, 306) that are parallel in pairs, the back and lateral walls defining a housing of substantially parallelepipedal form shaped to receive the strain take-up element (10), and **in that** the receiving element (30) is shaped so that, when the strain take-up element (10) is housed in said housing:
- the lateral walls of the receiving element (30) are in contact with the lateral walls of the hollow box (12) of the strain take-up element (10),
- the back wall (301) of the receiving element (30) is in contact with the indexing cross (14) or the cylinder (20) of the strain take-up element (10),
- at least two opposing planar walls (303, 305) are in contact with the planar free ends (161, 181) of two opposing branches (16, 18) of the indexing cross (14) of the strain take-up element (10),
and in which the lateral walls of a strain take-up element (10) and of a corresponding receiving element (30) are in contact.

6. Assembly according to Claim 5, **characterized in that** the back wall (301) of the receiving element (30) comprises a through-orifice (32) positioned so that its axis coincides with the axis (22) of the cylinder (20) of the strain take-up element (10) when the latter is housed in the housing, this orifice (32) having a diameter equal to or greater than the diameter of the bore (21) of the cylinder (20).

7. Assembly according to Claim 6, **characterized in that** each receiving element (30) is assembled with a strain take-up element (10) by means of a fixing screw (40) passing through the orifice (32) of said receiving element (30) and the bore (21) of the cylinder (20) of said strain take-up element (10).

8. Assembly according to one of Claims 5 to 7, **characterized in that** the strain take-up elements (10) all have the same orientation.

9. Assembly according to one of Claims 5 to 8, **characterized in that** the strain take-up elements (10) are oriented so that the branches of the indexing cross (14), the planar free ends of which extend in the continuity of the outer face of the adjacent planar lateral walls of the hollow box of the take-up element, extend in a direction corresponding to the direction of the greatest forces exerted on the assembly.
